# EUROPÄISCHE PATENTANMELDUNG

(11) **EP 1 413 969 A2**
(43) Veröffentlichungstag der Anmeldung: **28.04.2004**
(21) Anmeldenummer: 03405755.4
(22) Anmeldetag: 18.10.2003
(51) Int. Cl.: G06F 17/60

(54) **Verfahren zur Steuerung von Transaktionen im Krankenhausbereich sowie Kommunikationsvorrichtung und Endvorrichtung für den Krankenhausbereich**

(30) Priorität: 21.10.2002 CH 17642002; 15.02.2003 CH 2482003
(71) Anmelder: Transrex AG, 6023 Rothenburg (CH)
(72) Erfinder: Frutiger, Heinz, 8915 Hausen am Albis (CH); Ganyi, Tibor, 6330 Cham (CH); Rychen, Christoph, 6274 Eschenbach (CH)
(74) Vertreter: RUTZ ISLER & PARTNER

(57) **Zusammenfassung**

Das im Krankenhaus anzuwendende Verfahren dient der Steuerung von zum Bezug von Waren und/oder Dienstleistungen vorgesehenen Transaktionen im Krankenhausbereich. Dazu ist einem Anwender eine Endvorrichtung (1) individuell zugeordnet, welche der Bestellung der Waren und/oder Dienstleistungen und dem zumindest teilweisen Bezug der Dienstleistungen sowie der Erstellung von Telekommunikationsverbindungen dient, und die dazu über ein Netzwerk (100) mit einer Zentralvorrichtung (50) verbunden ist. Erfindungsgemäss wird zwischen der Endvorrichtung (1) und der Zentralvorrichtung (50) eine Verbindung aufgebaut, welche für die Vermittlungs- und die Transportschicht die Internetprotokolle IP/TCP, gegebenenfalls UDP verwendet, wonach mittels in der Endvorrichtung (1) und in der Zentralvorrichtung (50) installierten Steuermodulen die Transaktionen für den Bezug der Waren und/oder Dienstleistungen gesteuert werden.

## Beschreibung

Die Erfindung betrifft ein Verfahren zur Steuerung von Transaktionen im Krankenhausbereich sowie eine Kommunikationsvorrichtung und eine Endvorrichtung für den Krankenhausbereich nach dem Oberbegriff des Patentanspruchs 1 bzw. 9 bzw. 15.

Die Erfindung insbesondere betrifft ein Verfahren zur Steuerung von Transaktionen im Krankenhausbereich mittels tragbaren Speichermodulen sowie eine Kommunikationsvorrichtung mit tragbaren Speichermodulen für den Krankenhausbereich.

Die Erfindung betrifft ferner eine für die Kommunikationsvorrichtung verwendbare Endvorrichtung sowie ein Verfahren zur Durchführung von Transaktionen, mittels denen ein Patient anhand einer ihm zugeordneten Endvorrichtung Waren und/oder Dienstleistungen vom Krankenhausbetreiber beziehen kann.

Die nachstehend verwendeten Begriffe "Krankenhaus", "Krankenhausbereich" schliessen Gesundheits- und Betagteninstitute mit ein, in denen Personen betreut und/oder gepflegt werden.

Zur Bezahlung von Waren und Dienstleistungen werden im Krankenhausbereich oft tragbare Speichermodule, insbesondere mit einem Speicher versehene Karten, sogenannte Chip Cards oder Smart Cards, verwendet (siehe z.B. [1], US Patent 6,259,035 B1). Auf diese Karten können Patienten und Krankenhausangestellte einen Kredit übertragen lassen, der danach bei jeder Konsumation entsprechend reduziert wird. Ein Krankenhauspatient kann anhand der Karte beispielsweise Gebühren für Telefongespräche, Audio-, Video- und Fernsehübertragungen bezahlen, die zu einem am Krankenhausbett vorgesehenen Endsystem übertragen werden. Möglich ist ferner der Bezug von Waren in zentralen Restaurationsbetrieben, die den Karteninhabern zugänglich sind.

Die Transaktionen erfolgend dabei im off-line Betrieb, nach Einschub der Karte in den Kartenleser (siehe [2], US Patent 6,402,032 B1) eines den Karteninhabern zugänglichen Automaten oder einer einem Patienten zugeordneten Endvorrichtung.

Sofern genügend Kredit auf der eingeführten Karte registriert ist, kann der Patient die von ihm ausgewählten Waren und Dienstleistungen beziehen. Im Krankenhausbereich ist jedoch von besonderer Bedeutung, dass die Konsumationen der Patienten nicht im Widerspruch zu ärztlich verordneten Ernährungsplänen stehen. Dazu ist eine genaue Instruktion des Patienten erforderlich. Gelegentlich ist zu prüfen, welche Konsumationen getätigt wurden, was die Rücksprache mit Patienten erforderlich macht, welche oft nur unpräzise Angaben machen können.

Ferner werden die Hauptspeisen unter Berücksichtigung der individuellen Bedürfnisse normalerweise zentral vorbereitet, weshalb für das Personal hohe Aufwendungen und die Patienten oft unerwünschte Einschränkungen bezüglich der Auswahl der Menüauswahl sowie der Konsumationszeiten entstehen.

Wie erwähnt, weisen die jedem Krankenhauspatienten individuell zugeordneten Endvorrichtungen ferner ein Telefonendgerät auf, für dessen Benutzung anfallende Gebühren zentral erfasst oder dem auf dem Speichermodul registrierten Konto belastet werden.

Für die das Wählen einer Verbindung ist bekanntlich das Bereitstellen von Steuerinformationen für die Vermittlungstechnik erforderlich, mittels der die Verbindung zwischen dem rufenden und dem gerufenen Endgerät aufgebaut wird. Übliche Wahlverfahren sind die Impulstastenwahl (IWV) und das Mehrfrequenzwahlverfahren (MFV), bei dem die Wahlinformation mittels Signaltönen zur Vermittlungseinrichtung, beispielsweise einer Nebenstellenanlage (PBX, Private Branch Exchange), übertragen wird. Normalerweise wird das DTMF-Verfahren (DTMF: Dual Tone Multifrequency) angewendet, bei dem jedem Wählzeichen zwei unterschiedliche Töne bzw. (voice band) Frequenzen zugeordnet sind (siehe [7], F. Bergmann / H.-J. Gerhardt, Taschenbuch der Telekommunikation, Fachbuchverlag Leipzig, München 1999, Seiten 264-266).

Im Gegensatz zu Wählimpulsen, die gemäss dem Impulswahlverfahren mittels Schleifenunterbrechungen erzeugt werden, werden DTMF-Signale über eine erstellte Verbindung bis zum gerufenen Endgerät oder einer Vermittlungseinrichtung übertragen und können daher auch nach dem Aufbau der Verbindung für die Steuerung einer Vorrichtung oder Anlage verwendet werden.

Aus [8] DE Patentschrift 37 22 973 C1 ist ein Krankenhausinformationssystem bekannt, bei dem Informationen über eine aufgebaute Verbindung, beispielsweise vom Endgerät eines Patienten, mittels dem Mehrfrequenzwahlverfahren zu einer zentralen Erfassungs- und Steuervorrichtung übertragen werden. Mittels den übertragenen DTMF-Signalen können daher verschiedene Dienstleistungen freigeschaltet und die Abrechnung der entsprechend gelieferter Dienstleistungen gesteuert werden.

Während der Durchführung der Steuervorgänge, für die eine Verbindung vom Endgerät des Patienten zu einer Zentralvorrichtung aufgebaut wird, können bei dieser Vorrichtung jedoch keine weiteren Gespräche geführt werden. Zudem sind die Möglichkeiten zur Steuerung einer Anlage stark eingeschränkt oder deren Realisierung und Durchführung sind mit einem hohen Aufwand verbunden, welcher einem Patienten nicht zumutbar ist.

Der vorliegenden Erfindung liegt die Aufgabe zugrunde, ein verbessertes Verfahren zur Steuerung von Transaktionen im Krankenhausbereich sowie eine zur Durchführung dieses Verfahrens geeignete Kommunikationsvorrichtung und eine entsprechende Endvorrichtung anzugeben.

Insbesondere ist eine kostengünstig realisierbare Kommunikationsvorrichtung sowie eine einem Anwender zugeordnete Endvorrichtung zu schaffen, welche einfach bedienbar ist und gleichzeitig alle zur Steuerung von Waren und/oder Dienstleistungsbezügen erforderlichen Leistungsmerkmale aufweist.

Diese Aufgabe wird mit einem Verfahren und einer Vorrichtung gelöst, welche die in Anspruch 1 bzw. 11 angegebenen Merkmale aufweisen. Vorteilhafte Ausgestaltungen der Erfindung sind in weiteren Ansprüchen angegeben.

Das im Krankenhaus anzuwendende Verfahren dient der Steuerung von zum Bezug von Waren und/oder Dienstleistungen vorgesehenen Transaktionen im Krankenhausbereich. Dazu ist einem Anwender eine Endvorrichtung individuell zugeordnet, welche der Bestellung der Waren und/oder Dienstleistungen und dem zumindest teilweisen Bezug der Dienstleistungen sowie der Erstellung von Telekommunikationsverbindungen dient, und die dazu über ein Netzwerk mit einer Zentralvorrichtung verbunden ist.

Erfindungsgemäss wird zwischen der Endvorrichtung und der Zentralvorrichtung eine Verbindung aufgebaut, welche für die Vermittlungs- und die Transportschicht die Internetprotokolle IP/TCP, gegebenenfalls UDP verwendet, wonach mittels in der Endvorrichtung und in der Zentralvorrichtung installierten Steuermodulen die Transaktionen für den Bezug der Waren und/oder Dienstleistungen gesteuert werden.

Eine zur Anwendung dieses Verfahrens vorgesehene Endvorrichtung, weist die wesentlichen Module eines Personalcomputers auf. Vorgesehen sind ein Zentralprozessor CPU, dynamische und statische Speicher RAM, ROM, ein Bildschirm, eine Eingabeeinheit, ein Betriebssystem, Anwendungs- und Treiberprogramme, eine für den Aufbau der auf den Internetprotokollen IP; TCP, UDP basierenden Verbindungen geeignete und an das Netzwerk anschliessbare Netzwerkkarte, ein Telekommunikationsendgerät und eine Garnitur mit Schallwandlern. Erfindungsgemäss ist die Endvorrichtung, die ein zur Durchführung der Transaktionen dienendes Steuermodul aufweist, zum Aufbau von auf den Internetprotokollen IP; TCP, UDP basierenden Verbindungen zur Zentralvorrichtung geeignet, über die dem Bezug von Waren und/oder Dienstleistungen dienende Steuersignale übertragbar sind (Das Internet verwendet auf der Transportschicht eine verbindungsorientierte Protokollart TCP und eine nicht-verbindungsorientierte Protokollart UDP; sie [3], Seite 556).

Vorzugsweise wird ein berührungsempfindlicher Flüssigkristall-Bildschirm verwendet, über den der Anwender, dessen Instruktionen eingeben kann.

Alternativ oder zusätzlich sind die Instruktionen dem Steuermodul über ein Sprachsteuermodul oder eine Tastatur zuführbar.

In einer vorzugsweisen Ausgestaltung ist wenigstens ein Lesegerät (z.B. ein Chip-Karten-Leser) zum Lesen und/oder Beschreiben von zur Durchführung der Transaktionen dienenden Speichermodulen und/oder Kreditkarten vorgesehen. Vorzugsweise ist jedem Anwender ein Speichermodul zugeordnet, mittels dem die Transaktionen durchgeführt werden.

Die Endvorrichtung kann ferner mit
a) einem dem Empfang von TV-, Video- und/oder Audiosignalen dienenden, steuerbaren Kanalwähler (Tuner);
b) einer Festplatte;
c) einem CD-Rom Laufwerk und/oder einem DVD-Laufwerk; und/oder
d) einem der Trennung oder Überlagerung der auf einer ADSL-Leitung übertragenen Kanäle dienenden Filter;
versehen sein.

Zur Aufnahme aller verwendeten Module, mit Ausnahme der mit den Schallwandlern versehenen Garnitur, weist die Endvorrichtung vorzugsweise ein entsprechend ausgestaltetes Gehäuse auf.

Die Verbindung mittels der Internetprotokolle IP; TCP, UDP erfolgt vorzugsweise über die dafür vorgesehenen Datenkanäle einer xDSL-Verbindung, vorzugsweise einer ADSL- oder VDSL-Verbindung, welche nebst dem Kanal für den Internetzugang wenigstens einen weiteren Kanal aufweist, der für den Aufbau von Telekommunikationsverbindungen genutzt wird. Eine Übersicht über DSL-Technologien ist unter [10], Fraunhofer, Electronic Business Innovationszentrum, xDSL Vernetzungslösungen im Access-Bereich, aufgezeigt.

Die Verbindung mittels der Internetprotokolle IP; TCP, UDP kann ferner über ein lokales, gegebenenfalls nach den ETHERNET-Richtlinien arbeitendes Netzwerk oder über ein der Übertragung von Fernsehsendungen dienendes Netzwerk erfolgen.

Die in der Endvorrichtung und in der Zentralvorrichtung installierten Steuermodulen arbeiten nach dem Client- / Server-Prinzip, vorzugsweise unter Verwendung des Hyper Text Transfer Protokolls HTTP und/oder einer dafür vorgesehenen Sprache wie der Hyper Text Markup Language HTML. Auf dem Bildschirm, angewählt durch den Anwender oder ausgelöst durch das Einschieben eines Speichermoduls in das Lesegerät, wird durch das Steuermodul ein Steuermenü auf dem Bildschirm angezeigt, welches der Anwender zur Durchführung der Transaktionen für den Bezug der Waren und/oder Dienstleistungen verwenden kann. Vorzugsweise sind verschiedene Untermenüs vorgesehen, die zur Nutzung verschiedener Dienste verwendbar sind (Meldedienst einschliesslich Notruf; Video-, Audio- und Internetdienste, Telekommunikationsdienste; und Bestellung von Waren, z.B. Menüauswahl, und weiteren Diensten) .

Die Untermenüs sind derart ausgestaltet, dass die Waren und alle Dienstleistungen problemlos erkannt und bequem ausgewählt werden können.

Mittels den dem Anwender individuell zugeordneten Speichermodulen sind Transaktionen im on-line-Betrieb, in dem die Zentralvorrichtung die Transaktionen registriert und/oder steuert, und vorzugsweise auch im off-line-Betrieb, ohne Aktivierung der Zentralvorrichtung, durchführbar.

In einer vorzugsweisen Ausgestaltung wird während einer Transaktion ein dem Anwender zugeordneter individueller Code über die erstellte TCP/IP Verbindung zur Zentralvorrichtung übertragen, welche die Transaktion registriert und/oder anhand von dem Anwender zugeordneten Datensätzen steuert, die in lokal oder dezentral, gegebenenfalls in den tragbaren Speichermodulen oder in der Endvorrichtung vorgesehenen Speicherbereichen abgelegt sind, auf die die Zentralvorrichtung zugreifen kann.

Die Zentralvorrichtung ist daher in der Lage, die Transaktion anwenderspezifisch zu steuern und den Anwender bei der Auswahl der Waren und/oder Dienstleistungen zu unterstützen bzw. die Auswahl der Waren und/oder Dienstleistungen entsprechend einem gegebenenfalls ärztlich verordneten Heilungs- oder Ernährungsprogramm entsprechen zu beschränken. Für einen bestimmten Patienten sind beispielsweise nur fleischlose und weitgehend fettfreie Speisen wählbar. Ferner kann der Bezug von Videooder TV- oder Telekommunikationsübertragungen beschränkt werden.

Die Zentralvorrichtung erzeugt basierend auf der Identität des Anwenders Filtersätze, mittels denen entsprechende Nutzungsoder Auswahlbeschränkungen in der benutzten Endvorrichtung vorgenommen werden.

Die Filtersätze werden vorzugsweise unter Berücksichtigung der Tageszeit und/oder der bereits registrierten Bezüge von Waren und/oder Dienstleistungen gebildet.

Die Auswahl von Speisen an der dem Anwender individuell zugeordneten Endvorrichtung, unter Berücksichtigung allfälliger Bezugsbeschränkungen, erleichtert die Logistik, da die Patienten, gegebenenfalls mit Unterstützung des Pflegepersonals, rasch ihre Auswahl für den folgenden Tag oder die gesamte Woche treffen können. Ein Verteilen von Fragebogen oder die individuelle Abfrage aller Patienten und die anschliessende Konsolidierung der Abfrageergebnisse entfallen. Diese problemlos ermittelten Daten erlauben insbesondere eine verbesserte Planung der Einkäufe der Krankenhausküche.

Vorzugsweise sind die Endvorrichtungen auch zur Ausgabe von Sprachsignalen geeignet, so dass die Anwender bei der Auswahl der Waren und/oder Dienstleistungen und bei der Durchführung der Transaktionen durch die Zentralvorrichtung und/oder die betreffende Endvorrichtung akustisch unterstützt werden können.

Die Bezüge von Waren und Dienstleistungen, wenigstens deren Kosten, werden auf dem Speichermodul vorzugsweise geordnet nach Kategorie oder Kostenstellen registriert. Die Kosten für die Leistungsbezüge können auch mittels der Zentralvorrichtung registriert werden, so dass eine Doppelte Buchhaltung geführt wird.

In einer vorzugsweisen Ausgestaltung ist das Lesegerät der ersten und/oder der zweiten Endvorrichtung zum Lesen von Kreditkarten geeignet, so dass eine Kreditkartenbelastung zu Gunsten des Krankenhauses sowie eine entsprechende Gutschrift zu Gunsten des Anwenders bzw. Kreditkarteninhabers durch die Zentralvorrichtung registriert werden kann, welche eine entsprechende Gutschrift bei der nächsten Kontaktaufnahme an das Speichermodul des betreffenden Anwenders überträgt. Diese erfindungsgemässen Massnahmen führen zu einer wesentlichen Vereinfachung des Zahlungsverkehrs.

Möglich ist ferner die Verwendung eines weiteren zur Aufnahme von Kreditkarten dienenden Lesegeräts, mittels dessen Kredite auf das Speichermodul übertragbar sind.

Ferner kann das tragbare Speichermodul auch zur Kontrolle des Zutritts des Anwenders zu Räumen oder Zonen des Krankenhausees verwendet werden.

Für den Aufbau der auf den Internetprotokollen IP; TCP, UDP basierenden Verbindungen werden/wird vorzugsweise
a) Datenkanäle einer xDSL-Verbindung (vorzugsweise ADSL-, ..., VDSL-, ...),
b) ein lokales, gegebenenfalls nach den ETHERNET-Richtlinien arbeitendes lokales Netzwerk, oder
c) ein der Übertragung von Fernsehsendungen dienendes Netzwerk
verwendet. Dies hat den Vorteil, dass die für die Telekommunikationsverbindungen vorgesehene Leitung bei der Übertragung von Steuersignalen freigehalten wird.

Diese Telekommunikationsverbindungen werden vorzugsweise basierend auf dem für die Vermittlungsschicht verwendeten Internetprotokoll IP sowie Voice-over-IP-Protokollen erstellt, so dass die gesamte Kommunikationsvorrichtung, welche die Zentralvorrichtung und gegebenenfalls damit verbundene Abteilungsrechner sowie die Endvorrichtungen umfasst, mittels eines auf dem Internetprotokoll IP basierenden Netzwerks realisiert werden kann. Für dieses sogenannte Voice over IP (VoIP) - Netzwerk werden, wie in [9], Sean Christensen, Voice over IP solutions, Part Number 200011-002 06-01, Juniper Networks, Sunnyvale 2001, beschrieben, Media Gateway Controller bzw. Gatekeeper und VoIP Gateways benötigt, welche das IP-Netzwerk mit einem öffentlichen Telefonnetz PSTN/ISDN verbinden.

Das Netzwerk, welches die Endvorrichtungen mit der Zentralvorrichtung verbindet, kann drahtgebunden oder drahtlos realisiert werden (siehe beispielsweise [3], Andrew S. Tanenbaum, Computernetzwerke, 3. Auflage, Prentice Hall 1998, Seiten 25-33). Die Datenübertragung von den tragbaren Speichermodulen zu den Endvorrichtungen kann ebenfalls drahtgebunden (mittels Kontaktierung der Speichereinheit) oder drahtlos (optisch, induktiv oder durch Übertragung elektromagnetischer Wellen) erfolgen.

Nachfolgend wird die Erfindung anhand von Zeichnungen näher erläutert. Dabei zeigt:
- Figur 1: eine erfindungsgemässe Kommunikationsvorrichtung mit ersten, Anwendern individuell zugeordneten Endvorrichtungen 1, mit zweiten allen Anwendern oder Gruppen von Anwendern zugeordneten Endvorrichtungen 2, mit einer Zentralvorrichtung 50, mit einer Gruppe 6 von Dienstleistungsvorrichtungen 61, ..., 64 sowie mit der Durchführung von Transaktionen dienenden Speichermodulen 3;
- Figur 2: eine erste Endvorrichtung 1 in einer vorzugsweisen Ausgestaltung; und
- Figur 3: ein bevorzugtes Speichermodul 3 mit einem Chip 31 bzw. einer integrierten Schaltung, die mittels Kontakten 32 oder einer Induktionsschleife 33 mit einer ersten oder zweiten Endvorrichtung 1, 2 in Kontakt treten kann.

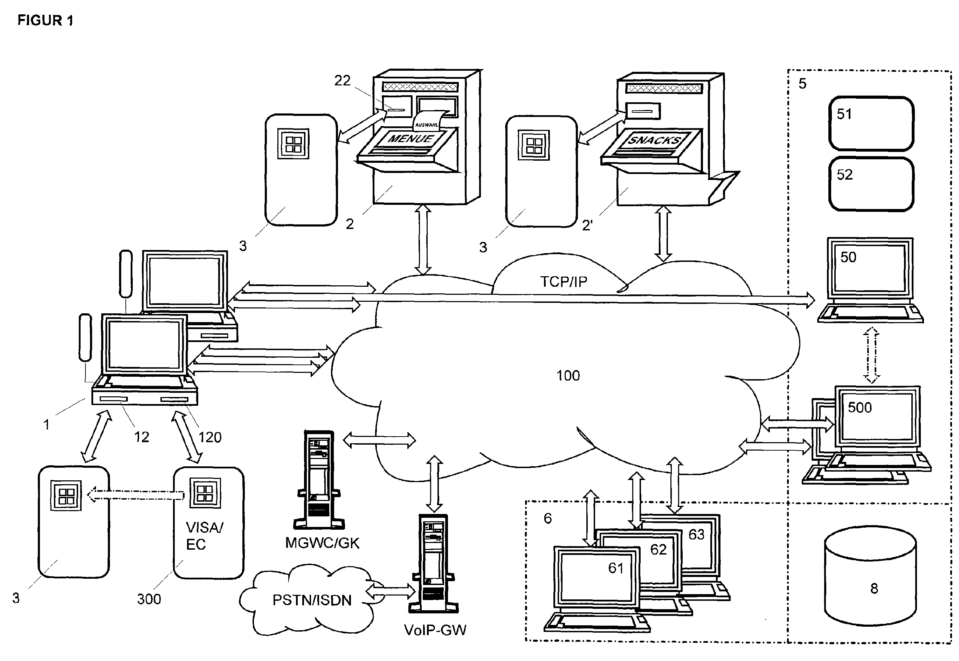

Figur 1 zeigt eine erfindungsgemässe Vorrichtung mit ersten, Anwendern individuell zugeordneten Endvorrichtungen 1, mit zweiten, allen Anwendern oder Gruppen von Anwendern zugeordneten Endvorrichtungen 2, die über ein Netzwerk 100 mit einer Zentralvorrichtung 50 verbunden sind. An das Netzwerk 100 ist ferner eine Gruppe 6 von Dienstleistungsvorrichtungen 61, ..., 63 sowie eine Gruppe mit der Zentralvorrichtung 50 verbundener Abteilungsrechner 500 angeschlossen. In der gezeigten Ausgestaltung der Erfindung ist die Gruppe 6 von Dienstleistungsvorrichtungen 61, ..., 63 und die Zentralvorrichtung 50 mit den Abteilungsrechnern 500, welche organisatorisch eine Verwaltungsgruppe 5 bilden, mit einer zentralen Datenbank 8 verbunden, in der die Daten der verwalteten Anwender, insbesondere der Krankenhauspatienten und des Personals abgelegt sind.

Gezeigt sind ferner die vorzugsweise bei der Durchführung von Transaktionen verwendeten Speichermodule 3, die in Lesevorrichtungen 12, 22 einschiebbar sind, die in der gezeigten Ausgestaltung in die ersten bzw. zweiten Endvorrichtungen 1, 2 integriert sind. Diese Transaktionen werden vorzugsweise von der Zentralvorrichtung registriert und/oder gesteuert.

Die Transaktionen erfolgend dabei zumeist im on-line-Betrieb, in dem die Zentralvorrichtung die Transaktionen registriert und/oder steuert.

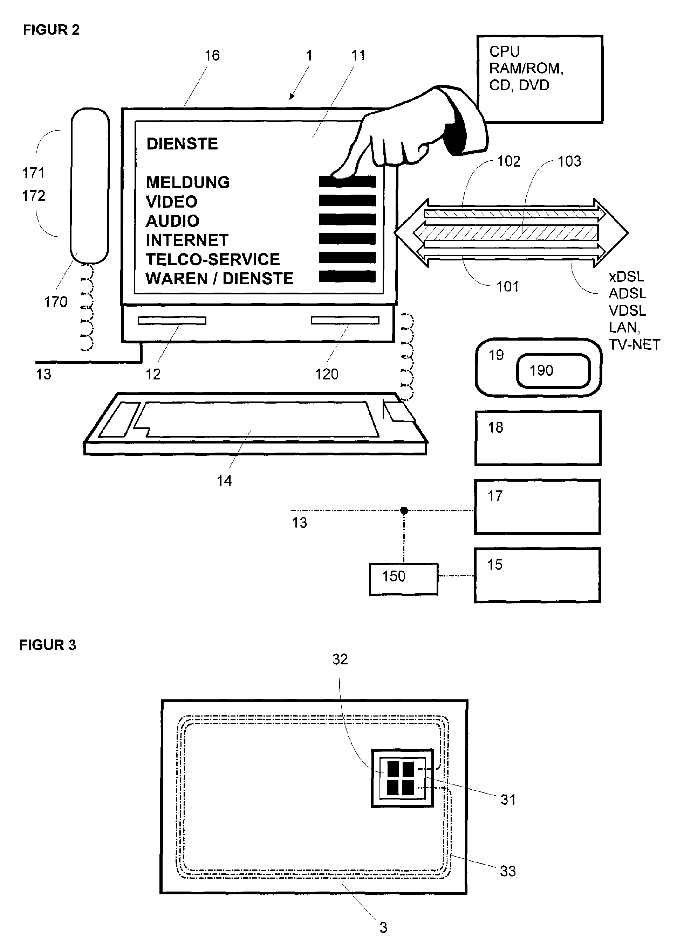

Eine dem Anwender bzw. Krankenhauspatienten individuell zugeordnete Endvorrichtungen 1 ist in Figur 2 in vorzugsweiser Ausgestaltung dargestellt ist.

Diese Endvorrichtung 1 umfasst wesentliche Elemente eines Personalcomputers, wie Zentralprozessor CPU, dynamische und statische Speicher RAM, ROM, einen Bildschirm 11, eine Eingabeeinheit 11, ein Betriebssystem, Anwendungs- und Treiberprogramme, eine für den Aufbau der auf den Internetprotokollen IP; TCP, UDP basierenden Verbindungen geeignete und an das Netzwerk 100 anschliessbare Netzwerkkarte 15, ein Telekommunikationsendgerät 17 und eine zum Sprechen und/oder Hören dienende Garnitur 170 mit Schallwandlern (Lautsprecher 171 und Mikrofon 172).

Erfindungsgemäss ist die Endvorrichtung 1, die ein zur Durchführung der Transaktionen dienendes Steuermodul 19 aufweist, zum Aufbau von auf den Internetprotokollen IP; TCP, UDP basierenden Verbindungen zur Zentralvorrichtung 50 geeignet, über die dem Bezug von Waren und/oder Dienstleistungen dienende Steuersignale übertragbar sind.

Vorzugsweise wird ein berührungsempfindlicher Flüssigkristall-Bildschirm verwendet, über den der Anwender, dessen Instruktionen eingeben kann.

In einer weiteren vorzugsweisen Ausgestaltung sind die Instruktionen dem Steuermodul 19 über ein Sprachsteuermodul 190 zuführbar (siehe [5], ganzes Dokument), so dass körperlich behinderte Anwender die Endvorrichtungen 1 ebenfalls benutzen können. Alternativ oder zusätzlich sind die Instruktionen dem Steuermodul 19 auch über eine Tastatur 14 zuführbar.

In einer vorzugsweisen Ausgestaltung ist wenigstens ein Lesegerät 12 (z.B. ein Chip-Karten-Leser) zum Lesen und/oder Beschreiben von zur Durchführung der Transaktionen dienenden Speichermodulen 3 und/oder Kreditkarten 300 vorgesehen. Vorzugsweise ist jedem Anwender ein Speichermodul zugeordnet, mittels dem die Transaktionen durchgeführt werden. Die Durchführung der Transaktionen kann in einer vorzugsweisen Ausgestaltung der Kommunikationsvorrichtung 50 und der Endvorrichtungen 1 aber auch ohne Verwendung der Speichermodule 3 erfolgen. Figur 3 zeigt ein bevorzugtes Speichermodul 3 in der Form einer Chipkarte mit einem Chip 31 bzw. einer integrierten Schaltung, die mittels Kontakten 32 oder einer Induktionsschleife 33 mit einer ersten oder zweiten Endvorrichtung 1, 2 in Kontakt treten kann.

Die über ein Kabel 13 an das Netzwerk 100 anschliessbare Endvorrichtung 1 kann ferner mit
a) einem dem Empfang von TV-, Video- und/oder Audiosignalen dienenden, steuerbaren Kanalwähler 18 (Tuner);
b) einer Festplatte HD;
c) einem CD-Rom Laufwerk und/oder einem DVD-Laufwerk; und/oder
d) einem der Trennung oder Überlagerung der auf einer ADSL-Leitung übertragenen Kanäle dienenden Filter; versehen sein.

Zur Aufnahme aller verwendeten Module, mit Ausnahme der mit den Schallwandlern versehenen Garnitur, weist die Endvorrichtung 1 vorzugsweise ein entsprechend ausgestaltetes Gehäuse 16 auf.

Einzelne Komponenten der Endvorrichtung 1, beispielsweise das Telekommunikationsendgerät 17 und der mit dem TV-Netz verbundene Kanalwähler 18, können jedoch auch extern aufgestellt werden.

Die Garnitur 170 mit Schallwandlern und die Tastatur 14 können auch drahtlos (wireless, cordless), beispielsweise gemäss dem DECT- oder BLUETOOTH-Verfahren arbeitend, mit der Endvorrichtung verbunden sein (betreffend DECT siehe [4], B. Walke, Mobilfunknetze und ihre Protokolle, Band 2, Teubner Verlag Stuttgart 2000, Seiten 107-113; betreffend BLUETOOTH siehe beispielsweise [5], US Patent Application Nr. 2002/0077095 A1) .

Die Vernetzung der Systeme erfolgt besonders vorteilhaft mittels der ADSL (Asymmetric-Digital-Subscriber-Line) Technologie. ADSL ist eine Technologie, welche den herkömmlichen analogen oder digitalen Telefonanschluss in einen Breitband-Internetzugang verwandelt. ADSL teilt die Übertragungskapazität des Kupferdrahts einer herkömmlichen Telefonleitung digital in drei unterschiedlich grosse Bereiche auf; zwei Kanäle 102, 103 für den Datentransport und einen Telefonkanal 101 für die Übertragung von Nutz- und Steuersignalen einer Telefonverbindung. Die Datenkanäle 102, 103 weisen dabei unterschiedliche Bandbreiten auf. Für den Datenkanal 103, der der Übertragung von Daten hin zur Endvorrichtung 1 dient (downstream), ist eine Übertragungskapazität von rund 5 Mbit/s vorgesehen. Für den Datenkanal 102, mit dem Daten vom Endgerät wegtransportiert werden (upstream), ist eine reduzierte Übertragungskapazität von rund 0,5 Mbit/s vorgesehen. Die ADSL-Technologie ist beispielsweise in [6], US Patent 6,445,712 B1 beschrieben.

Der Anschluss der Endvorrichtungen 1 an das Netzwerk 100 mittels ADSL Technologie erlaubt dem Anwender, gleichzeitig zu telefonieren und Daten über das Internet auszutauschen. Ferner kann eine TCP/IP Verbindung (siehe [3], Seiten 442-449 und Seiten 556-558) zur Zentralvorrichtung 50 aufgebaut werden, über die vorzugsweise basierend auf dem Hyper Text Transfer Protokoll HTTP Daten zwischen der Zentralvorrichtung 50 und der Endvorrichtung 1 übertragen werden (siehe [3], Seiten 722-743). Leistungsfähigere, insbesondere für den Videobereich geschaffene Technologien wie VDSL, sind selbstverständlich auch einsetzbar. Mittels VDSL lässt sich beispielsweise das Leistungsmerkmal "VIDEO ON DEMAND" (Übertragung von ausgewählten Videodaten) am Endgerät des Patienten realisieren.

Parallel dazu kann ferner ein internes lokales Netzwerk vorhanden sein, das beispielsweise auf der ETHERNET-Technologie basiert, welche die Dienstleistungen der auf die Bitübertragungsschicht und die Sicherungsschicht aufgesetzten MAC-Teilschicht einer Netzwerkarchitektur zur Verfügung stellt (siehe [3], Seiten 303-309).

Der Zugang zum Internet und die Übertragung von Instruktionen, insbesondere Steuerbefehlen kann zudem über TCP/IP - Verbindungen erfolgen, die auf dem lokalen, gegebenenfalls nach Ethernettechnologie errichteten Netzwerk errichtet werden (siehe [8], A. Shaikh, K.J. Christensen, Traffic Characteristics of Bulk Data Transfer using TCP/IP over Gigabit Ethernet). Ein ADSL-Anschluss wird in diesem Fall nicht benötigt.

Der Zugang zum Internet und die Übertragung von Instruktionen, insbesondere Steuerbefehlen kann zudem über das TV-Netz erfolgen. Ein ADSL-Anschluss wird auch in diesem Fall nicht benötigt.

In einer vorzugsweisen Ausgestaltung werden die Telekommunikationsverbindungen basierend auf dem für die Vermittlungsschicht verwendeten Internetprotokoll IP sowie Voice-over-IP-Protokollen erstellt, so dass die gesamte Kommunikationsvorrichtung, welche die Zentralvorrichtung 50 und gegebenenfalls damit verbundene Abteilungsrechner 500 sowie die Endvorrichtungen 1 umfasst, mittels eines auf dem Internetprotokoll IP basierenden Netzwerks realisiert werden kann und ein ADSL -Anschluss auch in diesem Fall nicht benötigt wird. Für Voice over IP (VoIP) - Netzwerk werden, wie in [9], Sean Christensen, Voice over IP solutions, Part Number 200011-002 06-01, Juniper Networks, Sunnyvale 2001, beschrieben, Media Gateway Controller MGWC bzw. Gatekeeper GK und VoIP Gateways VoIP/GW benötigt, welche das IP-Netzwerk mit einem öffentlichen Telefonnetz PSTN/ISDN verbinden. Zusätzlich kann eine separate zur Durchschaltung von IP Verbindungen dienende Vermittlungsvorrichtung LAN-PBX vorgesehen sein, welche die traditionelle Nebenstellenanlage PBX ersetzt.

Die oben beschriebene Registrierung des Bezugs von Waren und Dienstleistungen dient ferner dem optimierten Einkauf bzw. der Lagerbewirtschaftung und/oder der Rechnungsführung des Krankenhauses. Dazu sind in der Zentralvorrichtung 50 entsprechende Module 51, 52 vorgesehen, welche die registrierten Transaktionen analysieren und entsprechende Finanzbuchungen oder Lagerbuchungen durchführen.

Die Daten des Anwenders, welche die Zentralvorrichtung bei der Steuerung der Transaktionen hinzu zieht, können auch in den tragbaren Speichermodulen 3 abgelegt sein, so dass diese auch für den off-line-Betrieb genutzt werden können.

Die Bezüge von Waren und Dienstleistungen, wenigstens deren Kosten, werden auf dem Speichermodul 3 vorzugsweise geordnet nach Kategorie oder Kostenstellen registriert. Die Kosten für die Leistungsbezüge können auch mittels der Zentralvorrichtung 50 registriert werden, so dass eine Doppelte Buchhaltung geführt wird.

In einer vorzugsweisen Ausgestaltung ist das Lesegerät 12, 22 der ersten und/oder der zweiten Endvorrichtung 1, 2, 2' zum Lesen von Kreditkarten geeignet, so dass eine Kreditkartenbelastung zu Gunsten des Krankenhauses sowie eine entsprechende Gutschrift zu Gunsten des Anwenders bzw. Kreditkarteninhabers durch die Zentralvorrichtung 50 registriert werden kann, welche eine entsprechende Gutschrift bei der nächsten Kontaktaufnahme an das tragbare Speichermodul 3 überträgt. Diese erfindungsgemässen Massnahmen führen zu einer wesentlichen Vereinfachung des Zahlungsverkehrs.

Möglich ist ferner die Verwendung eines weiteren zur Aufnahme von Kreditkarten dienenden Lesegeräts 120, 220 mittels dessen Kredite auf das Speichermodul übertragbar sind.

Ferner kann das tragbare Speichermodul 3 auch zur Kontrolle des Zutritts des Anwenders zu Räumen oder Zonen des Krankenhauses verwendet werden.

Die erfindungsgemässe Verbindungsvorrichtung wurde in einer bevorzugten Ausgestaltung beschrieben und dargestellt. Anhand der erfindungsgemässen Lehre sind jedoch weitere fachmännische Ausgestaltungen realisierbar.

### Literaturverzeichnis

[1] US Patent 6,259,035 B1
[2] US Patent 6,402,032 B1
[3] Andrew S. Tanenbaum, Computernetzwerke, 3. Auflage, Prentice Hall, München 1998
[4] B. Walke, Mobilfunknetze und ihre Protokolle, Band 2, Teubner Verlag Stuttgart 2000
[5] US Patent Application Nr. 2002/0077095 A1
[6] US Patent 6,445,712 B1
[7] F. Bergmann / H.-J. Gerhardt, Taschenbuch der Telekommunikation, Fachbuchverlag Leipzig, München 1999
[8] A. Shaikh, K.J. Christensen, Traffic Characteristics of Bulk Data Transfer using TCP/IP over Gigabit Ethernet
[9] Sean Christensen, Voice over IP solutions, Part Number 200011-002 06-01, Juniper Networks, Sunnyvale 2001
[10] Fraunhofer, Electronic Business Innovationszentrum, xDSL Vernetzungslösungen im Access-Bereich

## Patentansprüche

1. Verfahren zur Steuerung von dem Bezug von Waren und/oder Dienstleistungen dienenden Transaktionen im Krankenhausbereich, mittels einer einem Anwender individuell zugeordneten Endvorrichtung (1), welche der Bestellung der Waren und/oder Dienstleistungen und dem zumindest teilweisen Bezug der Dienstleistungen sowie der Erstellung von Telekommunikationsverbindungen dient, und die dazu über ein Netzwerk (100) mit einer Zentralvorrichtung (50) verbunden ist, **dadurch gekennzeichnet, dass** zwischen der Endvorrichtung (1) und der Zentralvorrichtung (50) eine Verbindung aufgebaut wird, welche für die Vermittlungs- und die Transportschicht die Internetprotokolle (IP; TCP, UDP) verwendet, wonach mittels in der Endvorrichtung (1) und in der Zentralvorrichtung (50) installierten Steuermodulen (19; 190) die Transaktionen für den Bezug der Waren und/oder Dienstleistungen gesteuert werden.

2. Verfahren nach Anspruch 1, **dadurch gekennzeichnet, dass** die Verbindung mittels der Internetprotokolle (IP; TCP, UDP) über die dafür vorgesehenen Datenkanäle einer xDSL-Verbindung, vorzugsweise einer ADSL- oder VDSL-Verbindung erfolgt, welche einen weiteren Kanal aufweist, welcher für den Aufbau von Telekommunikationsverbindungen genutzt wird.

3. Verfahren nach Anspruch 1, **dadurch gekennzeichnet, dass** die Verbindung mittels der Internetprotokolle (IP; TCP, UDP) über ein lokales, gegebenenfalls nach den ETHERNET-Richtlinien arbeitendes lokales Netzwerk oder über ein der Übertragung von Fernsehsendungen dienendes Netzwerk erfolgt.

4. Verfahren nach Anspruch 1, 2 oder 3, **dadurch gekennzeichnet, dass** die Telekommunikationsverbindungen basierend auf dem für die Vermittlungsschicht verwendeten Internetprotokoll (IP) sowie Voice-over-IP-Protokollen erstellt werden.

5. Verfahren nach einem der Ansprüche 1 bis 4, **dadurch gekennzeichnet, dass** dem Anwender ein tragbares Speichermodul (3) zugeordnet ist, mittels dessen Transaktionen im on-line-Betrieb, in dem die Zentralvorrichtung (50) die Transaktionen registriert und/oder steuert, oder im off-line-Betrieb, ohne Aktivierung der Zentralvorrichtung (50), durchgeführt werden.

6. Verfahren nach einem der Ansprüche 1 bis 5, **dadurch gekennzeichnet, dass** während einer Transaktion ein dem Anwender zugeordneter individueller Code über die erstellte TCP/IP Verbindung zur Zentralvorrichtung (50) übertragen wird, welche die Transaktion anhand von dem Anwender zugeordneten Datensätzen steuert, die in lokal oder dezentral, gegebenenfalls in den tragbaren Speichermodulen (3) vorgesehenen Speicherbereichen (8) abgelegt sind, auf die die Zentralvorrichtung (50) zugreifen kann.

7. Verfahren nach einem der Ansprüche 1 bis 6, **dadurch gekennzeichnet, dass** die Kommunikation zwischen der Zentralvorrichtung (50) und der Endvorrichtung (1) basierend auf dem Hyper Text Transfer Protokoll (HTTP) und/oder einer dafür vorgesehenen Sprache wie der Hyper Text Markup Language (HTML) erfolgt.

8. Verfahren nach einem der Ansprüche 1 bis 7, **dadurch gekennzeichnet, dass** die Zentralvorrichtung (50) die Kostenbelastung und/oder das Angebot der Waren und/oder Dienstleistungen steuert, die mittels einer durchgeführten Transaktion an den Anwender abgegeben werden und/oder dass die Zentralvorrichtung (50) dass die Zentralvorrichtung (50) oder damit verbundene Systeme (500) anhand der registrierten Transaktionen die für die Lagerbewirtschaftung und/oder die Rechnungsführung oder die Überwachung des Bezugs ärztlich verordneter Waren, Medikamente oder Dienstleistungen erforderlichen Aktionen durchführen.

9. Kommunikationsvorrichtung zur Durchführung des Verfahrens nach einem der Ansprüche 1 bis 8, geeignet zur Steuerung von dem Bezug von Waren und/oder Dienstleistungen dienenden Transaktionen, im Krankenhausbereich, mittels einer einem Anwender individuell zugeordneten Endvorrichtung (1), welche der Bestellung und/oder der Abgabe der Waren und/oder Dienstleistungen sowie der Erstellung von Telekommunikationsverbindungen dient, und die dazu über ein Netzwerk (100) mit einer Zentralvorrichtung (50) verbunden ist, **dadurch gekennzeichnet, dass** die Vorrichtung zum Aufbau von Verbindungen zwischen der Endvorrichtung (1) und der Zentralvorrichtung (50) geeignet ist, welche für die Vermittlungs- und die Transportschicht die Internetprotokolle (IP; TCP, UDP) verwendet, wobei in der Endvorrichtung (1) und der Zentralvorrichtung (50) Steuermodule (19; 190) installiert sind, mittels denen die Transaktionen für den Bezug von Waren und/oder Dienstleistungen steuerbar sind.

10. Kommunikationsvorrichtung nach Anspruch 9, **dadurch gekennzeichnet, dass** für den Aufbau der auf den Internetprotokollen (IP; TCP, UDP) basierenden Verbindungen
a) Datenkanäle einer xDSL-Verbindung, vorzugsweise einer ADSL- oder VDSL-Verbindung,
b) ein lokales, gegebenenfalls nach den ETHERNET-Richtlinien arbeitendes Netzwerk, oder
c) ein der Übertragung von Fernsehsendungen dienendes Netzwerk
vorgesehen ist.

11. Kommunikationsvorrichtung nach Anspruch 9 oder 10, **dadurch gekennzeichnet, dass** für die Erstellung von Telekommunikationsverbindungen das für die Vermittlungsschicht verwendete Internetprotokoll (IP) und Voice-over-IP-Protokolle vorgesehen sind, wobei das Netzwerk (100) einen Media Gateway Controller oder einen Gatekeeper aufweist.

12. Kommunikationsvorrichtung nach Anspruch 9, 10 oder 11, **dadurch gekennzeichnet, dass** dem Anwender ein tragbares Speichermodul (3) zugeordnet ist, mittels dessen Transaktionen im on-line-Betrieb, in dem die Zentralvorrichtung (50) die Transaktionen registriert und/oder steuert, oder im off-line-Betrieb, ohne Aktivierung der Zentralvorrichtung (50), durchführbar sind.

13. Kommunikationsvorrichtung nach einem der Ansprüche 9 bis 12, **dadurch gekennzeichnet, dass** während einer Transaktion ein dem Anwender zugeordneter individueller Code über die erstellte TCP/IP Verbindung zur Zentralvorrichtung (50) übertragbar ist, durch die die Transaktion anhand von dem Anwender zugeordneten Datensätzen steuerbar ist, die in lokal oder dezentral, gegebenenfalls in den tragbaren Speichermodulen (3) vorgesehenen Speicherbereichen (8) abgelegt sind, auf die die Zentralvorrichtung (50) zugreifen kann.

14. Kommunikationsvorrichtung nach einem der Ansprüche 9 bis 13, **dadurch gekennzeichnet, dass** die Kommunikation zwischen der Zentralvorrichtung (50) und der Endvorrichtung (1) basierend auf dem Hyper Text Transfer Protokoll (HTTP) und/oder einer dafür vorgesehenen Sprache wie der Hyper Text Markup Language (HTML) erfolgt.

15. Endvorrichtung (1) zur Anwendung des Verfahrens nach einem der Ansprüche 1 bis 8 und zur Verwendung in einer Kommunikationsvorrichtung nach einem der Ansprüche 9 bis 14, bestehend aus einem Zentralprozessor (CPU), dynamischen und statischer Speichern (RAM, ROM), einem Bildschirm (11), einer Eingabeeinheit (11), einem Betriebssystem, Anwendungs- und Treiberprogrammen, einer für den Aufbau der auf den Internetprotokollen (IP; TCP, UDP) basierenden Verbindungen geeigneten und an das Netzwerk (100) anschliessbaren Netzwerkkarte (15), einem Telefonendgerät (17) und einer Garnitur (170) mit Schallwandlern (1701, 1702), **dadurch gekennzeichnet, dass** die Endvorrichtung (1) ein zur Durchführung der Transaktionen dienendes Steuermodul (19; 190) aufweist und zum Aufbau von auf den Internetprotokollen (IP; TCP, UDP) basierenden Verbindungen zur Zentralvorrichtung (50) geeignet ist, über die dem Bezug von Waren und/oder Dienstleistungen dienende Steuersignale übertragbar sind.

16. Endvorrichtung (1) nach Anspruch 15, **dadurch gekennzeichnet, dass** der Bildschirm (11) zur Eingabe von Steuersignalen geeignet und vorzugsweise ein Flüssigkristallbildschirm ist.

17. Endvorrichtung (1) nach Anspruch 15 oder 16, **dadurch gekennzeichnet, dass** dem Steuermodul (19) Instruktionen über ein Sprachsteuermodul (190) zuführbar sind.

18. Endvorrichtung (1) nach Anspruch 15, 16 oder 17, **dadurch gekennzeichnet, dass** wenigstens ein Lesegerät (12; 120) zum Lesen und/oder Beschreiben von zur Durchführung der Transaktionen dienenden Speichermodulen (3) und/oder Kreditkarten (300) vorgesehen ist.

19. Endvorrichtung (1) nach Anspruch einem der Ansprüche 15 bis 18, **dadurch gekennzeichnet, dass**
a) ein steuerbarer Kanalwähler (18) für den Empfang von TV-, Video- und/oder Audiosignalen;
b) eine Festplatte (HD);
c) ein CD-Rom Laufwerk und/oder ein DVD-Laufwerk; und/oder
d) ein Filter (150) zur Trennung oder Überlagerung der auf der einer xDSL-Verbindung, vorzugsweise der ADSLoder VDSL-Verbindung (13), übertragenen Kanäle;
vorgesehen sind.

20. Endvorrichtung (1) nach Anspruch einem der Ansprüche 15 bis 19, **dadurch gekennzeichnet, dass** ein zur Aufnahme der Module der Endvorrichtung (1) dienendes Gehäuse (16) vorgesehen ist.
